# EUROPÄISCHE PATENTSCHRIFT

(11) **EP 2 994 380 B1**
(45) Veröffentlichungstag und Bekanntmachung des Hinweises auf die Patenterteilung: **22.03.2017**
(21) Anmeldenummer: 14739754.1
(22) Anmeldetag: 09.07.2014
(51) Int. Cl.: B63H 23/24, B63H 5/125, H02K 1/20, H02K 5/20, H02K 9/22

(54) **ELEKTRISCHER GONDELANTRIEB FÜR EIN SCHIFF**
ELECTRIC POD DRIVE FOR A SHIP
SYSTÈME DE PROPULSION ÉLECTRIQUE MONTÉ DANS UNE NACELLE ET DESTINÉ À UN NAVIRE

(30) Priorität: 18.07.2013 DE 102013214087
(43) Veröffentlichungstag der Anmeldung: 16.03.2016
(73) Patentinhaber: Siemens Aktiengesellschaft, 80333 München (DE)
(72) Erfinder: BALZER, Christoph, 12163 Berlin (DE); SEIBICKE, Frank, 14822 Borkheide (DE)
(86) Internationale Anmeldenummer: PCT/EP2014/064682
(87) Internationale Veröffentlichungsnummer: WO 2015/007585

(56) Entgegenhaltungen:
- WO-A1-2006/134057
- DE-A1- 10 304 276
- DE-A1- 19 801 448
- DE-A1-102006 043 177
- DE-C1- 10 156 268

## Beschreibung

Die Erfindung betrifft einen elektrischen Gondelantrieb für ein Schiff, wobei der Gondelantrieb einen Elektromotor, welcher einen Stator aufweist, und ein Gehäuseteil aufweist, welches sich in axialer Richtung zumindest teilweise entlang des Stators erstreckt und welches in Umfangsrichtung den Stator zumindest teilweise umfasst.

Ein derartiger elektrischer Gondelantrieb kommt beispielsweise als Antriebseinheit bei einem Schiff zum Einsatz, wobei sich der Gondelantrieb außerhalb des Schiffsrumpfes und unterhalb des Wasserspiegels, insbesondere im Meerwasser, befindet und einen Propeller antreibt. Derartige Gondelantriebe sind auch unter der Bezeichnung POD-Antriebe bekannt. Dabei muss bei einem solchen elektrischen Gondelantrieb die Verlustwärme der elektrischen Maschine in geeigneter Form abgeführt werden, um die Maschine während des Betriebs auf einem konstanten und akzeptablen Temperaturniveau zu halten.

Die Wärmeabfuhr des Stators geschieht bisher über die Oberfläche des Gehäuses durch Konvektion. Das Statorblechpaket ist in ein Gehäuse eingeschrumpft, wodurch ein guter Wärmeübergang gewährleistet wird. Allerdings können die Wickelköpfe dadurch nicht ausreichend gekühlt werden, da sie das Gehäuse nicht berühren und somit die Wärme nicht direkt an das Gehäuse und somit an das Wasser übertragen werden kann.

Aus der DE 877 254 C ist ein Gondelantrieb bekannt, der einen Elektromotor in einem Motorgehäuse aufweist, wobei das Motorgehäuse von dem Gondelgehäuse umschlossen wird und zwischen dem Motorgehäuse und dem Gondelgehäuse ein Ringkanal vorgesehen ist. Dabei kann der Ringkanal von in die Gondel eindringendem Wasser durchströmt werden.

Aus der DE 198 26 229 A1 ist ein weiterer Gondelantrieb bekannt, welcher an einem Schaft am Schiffsrumpf befestigt ist. Dabei sind Kühlungselemente am Schaftunterteil vorgesehen. Weiterhin ist die Welle des Gondelantriebs als Hohlwelle ausgeführt, die von Meerwasser durchströmt werden kann.

Aus der WO 2006/134057 ist ein weiterer Gondelantrieb bekannt.

Der Erfindung liegt die Aufgabe zugrunde, einen elektrischen Gondelantrieb mit einer verbesserten Kühlung bereitzustellen. Diese Aufgabe wird durch einen elektrischen Gondelantrieb der eingangs genannten Art dadurch gelöst, dass im Wesentlichen in axialer Richtung verlaufende Kühlkanäle vorgesehen sind, in welchen jeweils zumindest ein Kühlmedium fließen kann und mittels welchen der Elektromotor kühlbar ist, wobei die Kühlkanäle zumindest nach radial innen jeweils durch eine Schicht eines Materials begrenzt werden, welches eine Wärmeleitfähigkeit von zumindest 1 W/(m*K) aufweist und welches zumindest in einer meerwasserhaltiger Atmosphäre korrosionsbeständig ist.

Bei elektrischen Maschinen ist die Kühlung des Inneren der Maschine oftmals problematisch, da sich im Betrieb dort Stellen mit Hitzestau, so genannte "hot spots", bilden. Erfindungsgemäß ist daher vorgesehen, die Kühlkanäle an ihrer radialen Innenseite eine vergleichsweise hohe Wärmeleitfähigkeit aufweisen, indem die Kühlkanäle zumindest nach radial innen durch eine Schicht eines Materials mit einer Wärmeleitfähigkeit von zumindest 1 W/(m*K) begrenzt werden. Durch diese Schicht, welche den jeweiligen Kühlkanal insbesondere auch nach radial außen und/oder in Umfangsrichtung begrenzen kann, wird eine zuverlässige und leistungsstarke Kühlung des elektrischen Gondelantriebs ermöglicht.

Dabei kann das Material der Schicht auch eine Wärmeleitfähigkeit von zumindest 60 W/(m*K) aufweisen. Geordnet nach zunehmender Wärmeleitfähigkeit sind derartige Materialien zum Beispiel die Legierung Bronze, insbesondere die Bronzelegierung CC333G bzw. CuAl10Fe5Ni5-C, sowie die Metalle Zinn, Chrom, Zink oder Aluminium, wobei auch Graphit eingesetzt werden könnte. Denkbar ist auch eine Legierung zu verwenden, die eine derartige Wärmeleitfähigkeit erreicht. Insbesondere kann ein Material gewählt werden, welches eine Wärmeleitfähigkeit von zumindest 80 W/(m*K)aufweist.

Dabei ist der Stator üblicherweise als Hohlzylinder ausgeführt, wobei die Kühlkanäle des elektrischen Gondelantriebs vorzugsweise radial weiter außen liegen als die innere Mantelfläche hohlzylinderförmigen Stators. Dies bedeutet, dass die Kühlkanäle zumindest teilweise im Stator, im Gehäuseteil und/oder zwischen dem Stator und dem Gehäuseteil verlaufen können.

Für eine besonders gute Kühlung des Elektromotors erstrecken sich die Kühlkanäle vorzugsweise über mehr als die Hälfte der axialen Länge des Stators, insbesondere über die komplette axiale Länge des Stators.

Insbesondere ist der Stator und/oder das Gehäuseteil aus einem Material mit einer Temperaturleitfähigkeit von weniger als 55 W/(m*K), beispielsweise weniger als 40 W/(m*K). Beispielsweise weist der Stator üblicherweise Elektrobleche auf, welche eine vergleichsweise geringe Wärmeleitfähigkeit von teilweise weniger als 30 W/(m*K) aufweisen. Weiterhin kann das Gehäuseteil aus Stahl sein, wobei üblicherweise aus Kostengründen gewöhnlicher Stahl zum Einsatz kommt und auf Sonderlegierungen oder Edelstahl verzichtet wird. Derartige, gewöhnliche Stähle haben üblicherweise eine Temperaturleitfähigkeit im Bereich von 15 W/(m*K) für Cr-Ni-Stahl bis maximal 55 W/(m*K) für Stahl mit weniger als 0,4 % Kohlenstoffanteil.

Das Material der Schicht ist dabei zumindest in einer meerwasserhaltiger Atmosphäre korrosionsbeständig, wobei diese Materialeigenschaft insbesondere während des ordnungsgemäßen Gebrauchs des elektrischen Gondelantriebs, insbesondere wenn der Gondelantrieb in Wasser bzw. Meerwasser eingetaucht ist, erreicht werden soll. Somit wird eine Dauerfestigkeit erreicht, welche einen jahrelangen Betrieb des Gondelantriebs im Meerwasser ermöglicht.

Insbesondere kann das Material derart gewählt werden, dass eine ausreichende Korrosionsbeständigkeit beispielsweise gemäß den Korrosivitätskategorien C4 oder C5-I für atmosphärische Umgebungsbedingungen bzw. Im2 oder Im3 für Wasser gemäß der DIN EN ISO 12944-2 gewährleistet ist. So ist beispielsweise denkbar, dass das Material in direktem Kontakt mit Meerwasser ist. Alternativ kann das Material in direktem Kontakt mit Kühlluft oder einem anderen Kühlmedium sein, welches durch den Betrieb des elektrischen Gondelantriebs in Meerwasser salzhaltig ist und somit die oben genannte meerwasserhaltige Atmosphäre darstellt. Somit kann das zumindest eine Kühlmedium beispielsweise flüssig oder gasförmig ausgeführt sein, insbesondere sind hierfür geschlossene Kühlkreisläufe mit zirkulierendem Kühlwasser bzw. zirkulieren der Kühlluft denkbar.

Beispielsweise kann eine ausreichende Korrosionsbeständigkeit interpretiert werden als eine Schutzdauer zwischen 5 und 15 Jahren bzw. als eine Schutzdauer von über 15 Jahren, wie in der DIN EN ISO 12944-5 erläutert.

Alternativ oder zusätzlich kann die Korrosionsbeständigkeit des Materials derart gewählt werden, dass die Abtragungsrate des Materials während des ordnungsgemäßen Gebrauchs des elektrischen Gondelantriebs weniger als 100 µm, insbesondere weniger als 50 µm, pro Jahr beträgt. Dabei kann die Dicke der Schicht derart bemessen sein, dass nach einer gewünschten Mindestlebensdauer bzw. Schutzdauer und bei einer gegebenen Abtragungsrate eine Mindestschichtdicke erhalten bleibt. Insbesondere kann vorgesehen sein, dass die Schicht die Kühlkanäle in radialer Richtung begrenzt.

Generell kann das Gehäuseteil der Antriebsgondel über einen Schaft an einer Unterseite des Schiffes drehbar angeordnet sein, wobei der Stator des elektrischen Gondelantriebs einen Durchmesser von mindestens 1 m, insbesondere größer als 2 m, aufweist. Dabei kann der elektrische Gondelantrieb eine Leistung von zumindest 1 MW, vorzugsweise mehr als 10 MW erreichen.

Bei einer vorteilhaften Ausgestaltung der Erfindung weist der Stator am jeweiligen axialen Ende einen Wickelkopf auf, wobei zumindest einer der Kühlkanäle zumindest abschnittsweise im axialen Bereich einer der Wickelköpfe verläuft, wobei zumindest eine Strömungsmaschine vorgesehen ist, welche zwischen einer Welle des elektrischen Gondelantriebs und dem Gehäuseteil angeordnet ist und welche drehfest mit der Welle verbunden ist, wobei der jeweilige Wickelkopf durch ein mittels der zumindest einen Strömungsmaschine umwälzbares, weiteres Kühlmedium kühlbar ist.

Durch die Verwendung der zumindest einen, drehfest mit der Welle verbundenen Strömungsmaschine kann die dem Gondelantrieb zuführbare Kühlleistung erhöht werden, was ermöglicht, dass der Gondelantrieb gegenüber dem den Gondelantrieb tragenden Schaft gekapselt ausgeführt werden kann. Dies wird dadurch ermöglicht, dass der Bereich des jeweiligen Wickelkopfs durch das weitere Kühlmedium kühlbar ist, welches von der zumindest einen Strömungsmaschine umgewälzt wird. Insbesondere kann dabei der Bereich des jeweiligen Wickelkopfs einen geschlossenen Kühlkreislauf bilden, wobei gegebenenfalls zumindest einer der Kühlkanäle zum jeweiligen Wickelkopfbereich hin geöffnet ist oder zumindest Wärme in den jeweiligen Bereich abgeben kann.

Ist einer der Kühlkanäle zum jeweiligen Wickelkopfbereich hin offen ausgeführt, wird neben einer verbesserten Kühlung des jeweiligen Wickelkopfs zusätzlich eine verbesserte Kühlung der axialen Mitte des Gondelantriebs erreicht, da Abwärme von der axialen Mitte zum Wickelkopfbereich abtransportiert werden kann.

Das weitere Kühlmedium kann gasförmig, beispielsweise als Luft, oder flüssig ausgeführt sein, wobei die zumindest eine Strömungsmaschine entsprechend als Lüfter bei einem gasförmigen Kühlmedium oder Pumpe bei einem flüssigen Kühlmedium ausgeführt ist. Prinzipiell ist dabei denkbar, dass das weitere Kühlmedium mit dem zumindest einen Kühlmedium identisch ist bzw. die beiden Kühlmedien im selben Kühlkreislauf zirkulieren. Insbesondere ist für diesen Fall eine Kühlung des jeweiligen Wickelkopfs durch das Kühlmedium möglich, welches anschließend durch die in axialer Richtung verlaufenden Kühlkanäle geführt wird.

Dabei ist die Anordnung der zumindest einen Strömungsmaschine zwischen der Welle und dem Gehäuseteil derart zu verstehen, dass der Welle von radial innen nach radial außen die zumindest eine Strömungsmaschine und schließlich das Gehäuseteil folgen. Somit ist nicht zwangsläufig ein Überlapp der jeweiligen Bauteile in axialer Richtung erforderlich.

Alternativ kann die zumindest eine Strömungsmaschine auch als Fremdlüfter bzw. als unabhängig von der Drehzahl der Welle betreibbare Strömungsmaschine ausgeführt sein.

Bei einer weiteren vorteilhaften Ausgestaltung der Erfindung ist zur Ausbildung zumindest eines der Kühlkanäle eine Nut im Gehäuseteil vorgesehen.

Dabei verläuft die Nut im Wesentlichen in axialer Richtung und trägt erheblich zu einer verbesserten Kühlung des Gehäuseteils bei. Da das Gehäuseteil den Stator in Umfangsrichtung zumindest teilweise umfasst und sich in axialer Richtung zumindest teilweise entlang des Stators erstreckt, wird dadurch auch die Kühlung des Stators verbessert. Dabei werden besonders gute Ergebnisse erzielt, wenn das Gehäuseteil sich entlang der kompletten axialen Länge des Stators erstreckt, den Stator in Umfangsrichtung komplett umfasst und eine Mehrzahl von durch derartige Nuten gebildeten Kühlkanälen vorgesehen ist, welche in Umfangsrichtung versetzt zueinander angeordnet sind.

Bei einer weiteren vorteilhaften Ausgestaltung der Erfindung ist zur Ausbildung zumindest eines der Kühlkanäle eine Nut im Stator vorgesehen.

Durch die Anordnung zumindest eines Kühlkanals in Form einer Nut im Stator kann die im Stator während des Betriebs des elektrischen Gondelantriebs entstehende Abwärme besonders gut abtransportiert werden, da die Kühlleistung direkt dort eingesetzt werden kann, wo auch die Abwärme entsteht.

Bei einer weiteren vorteilhaften Ausgestaltung der Erfindung ist zwischen dem Gehäuseteil und dem Stator ein Zwischenteil aus dem Material, aus dem die Schicht ist, angeordnet.

Durch das Zwischenteil wird die Abwärme des Stators an der Auflagefläche des Zwischenteils auf dem Stator flächendeckend aufgenommen und aufgrund der guten Wärmeleitfähigkeit des Zwischenteils gut abtransportiert. Insbesondere wenn das Gehäuseteil hohlzylinderförmig ausgeführt ist, kann auch das Zwischenteil hohlzylinderförmig ausgestaltet sein, wodurch eine besonders große Kühlleistung und gleichzeitig eine besonders gleichmäßig verteilte Kühlleistung erreicht werden kann.

Insbesondere wenn im Gehäuseteil am Umfang verteilte Nuten verlaufen, die in Achsrichtung angeordnet sind und die als Kühlkanäle fungieren, kann das Zwischenteil zum Abdichten dieser Kühlkanäle eingesetzt werden. Beispielsweise ist das Zwischenteil als Abdichtring ausgeführt, in den das Statorblechpaket eingeschrumpft wird. Durch den wärmeleitfähigen Abdichtring kann die Kühlleistung insgesamt positiv beeinflusst werden.

Bei einer weiteren vorteilhaften Ausgestaltung der Erfindung ist dabei zur Ausbildung zumindest eines der Kühlkanäle eine Nut im Zwischenteil vorgesehen.

Derartig ausgeformte Kühlkanäle ermöglichen, die dem Stator zuführbare Kühlleistung weiter zu erhöhen, da die vom Zwischenteil aufgenommene Abwärme des Stators über die im Zwischenteil verlaufende Nut direkt abtransportiert werden kann. Die Kühlleistung kann weiter dadurch erhöht werden, dass eine Mehrzahl derartiger Kühlkanäle vorgesehen wird.

Das Zwischenteil kann dabei als Kühlring ausgeführt sein, welcher zwischen das Gehäuseteil und das Statorblechpaket eingesetzt wird. Abhängig von den Randbedingungen sind im Zwischenteil Kühlkanäle vorgesehen, welche in Achsrichtung durchgehen und jeweils einen runden oder eckigen Querschnitt aufweisen und am Umfang verteilt angeordnet sind.

Bei einer weiteren vorteilhaften Ausgestaltung der Erfindung ist dabei die Nut offen oder geschlossen ausgeführt.

Ist die jeweilige Nut geschlossen ausgeführt, wird der jeweilige Kühlkanal durch eine in im Wesentlichen axialer Richtung verlaufende Bohrung gebildet. Diese Bohrung verläuft dabei innerhalb des jeweiligen Teils des elektrischen Gondelantriebs, also im Gehäuseteil, im Stator oder gegebenenfalls im Zwischenteil. Derartige Bohrungen sind sehr leicht einzuarbeiten, wobei ein derartig gebildeter Kühlkanal in radiale Richtung praktisch hermetisch dicht ausgeführt ist.

Wenn die jeweilige Nut offen ausgeführt ist, kann ein Kühlkanal gebildet werden, der sich in radialer Richtung über zumindest zwei Teile des elektrischen Gondelantriebs erstreckt. Zum Beispiel verläuft ein derartiger Kühlkanal in einer Nut an der radial äußeren Oberfläche des Stators und gleichzeitig in einer Nut an der radial inneren Oberfläche des Gehäuseteils oder gegebenenfalls des Zwischenteils. Entsprechend kann ein derartiger Kanal alternativ in einer Nut an der radial äußeren Oberfläche des Zwischenteils und gleichzeitig in einer Nut an der radial inneren Oberfläche des Gehäuseteils verlaufen. Prinzipiell ist auch denkbar, dass der Kühlkanal sich in radialer Richtung von einer Nut an der radial äußeren Oberfläche des Stators durch das Zwischenteil hindurch bis zu einer Nut an der radial inneren Oberfläche des Gehäuseteils erstreckt.

Generell kann die jeweilige Nut dabei einen viereckigen Querschnitt, beispielsweise einen rechteckigen oder quadratischen Querschnitt aufweisen. Auch ein runder, ovaler oder andersförmiger Querschnitt ist dabei denkbar.

Bei einer weiteren vorteilhaften Ausgestaltung der Erfindung ist an der radialen Begrenzung zumindest eines der Kühlkanäle ein Hohlprofil aus dem Material, aus dem die Schicht ist, angeordnet.

Das Hohlprofil stellt dabei einerseits einen besonders guten thermischem Kontakt des zumindest einen Kühlmediums mit dem den jeweiligen Kühlkanal umgebenden Material sicher und gewährleistet andererseits eine besonders hohe Dichtheit bezüglich eines Austritts des zumindest einen Kühlmediums in radiale Richtung und in Umfangsrichtung. Darüber hinaus sind derartige und Profile besonders kostengünstig erhältlich.

Dabei können mehrere Hohlprofile vorgesehen sein, die am Umfang verteilt in die oben erläuterten Nuten eingesetzt sind. Durch die Hohlprofile kann somit das zumindest eine Kühlmedium fließen. Insbesondere wenn ein Hohlprofil in einen Kühlkanal eingelassen ist, welcher sowohl in einer offenen Nut im Gehäuse als auch in einer offenen Nut im Statorblechpaket verläuft, kann das jeweilige Hohlprofil auch einen Teil des Drehmomentes aufnehmen, so dass das jeweilige Hohlprofil zusätzlich als Passfeder fungiert.

Damit ein guter Wärmeübergang vom eingeschrumpften Statorblechpaket zum Gehäuseteil gewährleistet ist, wird das jeweilige Hohlprofil zusammen mit dem Innendurchmesser des Gehäuseteils bearbeitet. Dadurch entsteht eine glatte und gleichmäßige Oberfläche für das einzuschrumpfende Statorblechpaket.

Bei einer weiteren vorteilhaften Ausgestaltung der Erfindung weist das Material, aus dem die Schicht ist, eine höhere Korrosionsbeständigkeit als das Material des Gehäuseteils und/oder das Material des Stators auf.

Da der elektrische Gondelantrieb üblicherweise in Meerwasser betrieben wird, ergeben sich besonders hohe Anforderungen an die Korrosionsbeständigkeit. Durch die höhere Korrosionsbeständigkeit des Materials, aus dem die Schicht ist, lässt sich beispielsweise der Stator gekapselt ausführen, wodurch er besonders gut vor Korrosion geschützt werden kann. Durch die Kühlkanäle kann der Stator dennoch mit einer ausreichenden Kühlleistung versorgt werden. Gegebenenfalls ist es hierzu erforderlich, dass der jeweilige Kühlkanal an allen Berührungsflächen mit dem Stator eine Schicht dieses besonders korrosionsbeständigen Materials aufweist. Beispielsweise kann dies auch dadurch erreicht werden, dass der jeweilige Kühlkanal senkrecht zur axialen Richtung durch eine Schicht dieses Materials begrenzt wird.

Bei einer weiteren vorteilhaften Ausgestaltung der Erfindung weist das Material, aus dem die Schicht ist, eine Kupfer-Aluminium-Legierung auf.

Die Kupfer-Aluminium-Legierung hat den Vorteil, dass sie eine vergleichsweise hohe Wärmeleitfähigkeit hat und dabei besonders korrosionsbeständig ist. Zusätzlich lässt sich dieses Material vergleichsweise leicht bearbeiten. Alternativ kann insbesondere Bronze verwendet werden.

Bei einer weiteren vorteilhaften Ausgestaltung der Erfindung sind am jeweiligen axialen Ende zumindest eines der Kühlkanäle jeweils eine Einlassöffnung und jeweils eine Auslassöffnung vorgesehen, wobei die jeweilige Einlassöffnung und/oder die jeweilige Auslassöffnung derart ausgeformt ist, dass bei einer Relativbewegung des Gondelantriebs in Bezug auf den Gondelantrieb zumindest teilweise umgebendes Wasser das Wasser durch die Einlassöffnung, den zumindest einen Kühlkanal und die Auslassöffnung hindurch strömen kann.

Mittels zumindest eines derart ausgeformten Kühlkanals kann ein besonders effizienter Abtransport der Abwärme des elektrischen Gondelantriebs erreicht werden, da die Abwärme unmittelbar an das als Wasser ausgeführte Kühlmedium abgegeben wird, welches den elektrischen Gondelantrieb zumindest teilweise umgibt. Von Vorteil sind dabei insbesondere die hohe Wärmekapazität des Wassers sowie die üblicherweise im Vergleich mit der Temperatur des Stators geringe Wassertemperatur. Eine besonders gute Kühlung kann dadurch erreicht werden, dass eine Mehrzahl von derartigen Kühlkanäle vorgesehen wird, welche in Umfangsrichtung voneinander beabstandet angeordnet sind.

Da der elektrische Gondelantrieb üblicherweise im salzhaltigen Meerwasser betrieben wird, ist der zumindest eine derart ausgeformte Kühlkanal vorzugsweise mit dem zuvor erläuterten besonders korrosionsbeständigen Material ausgekleidet, welches eine höhere Korrosionsbeständigkeit als das Material des Gehäuseteils und/oder das Material des Stators aufweist. Hierfür kann beispielsweise eine Kupfer-Aluminium-Legierung oder Bronze zum Einsatz kommen.

Dabei kann der derartig ausgeformte Kühlkanal mit einer Spezialbeschichtung versehen werden, welche einen Bewuchs mit Muscheln, Seepocken oder anderen Organismen verhindert, welche die Strömung durch den Kühlkanal blockieren könnten. Eine derartige Spezialbeschichtung kann beispielsweise ein Lack sein, an welchem die Organismen keinen Halt finden, insbesondere Werkstoffe mit einem Abperl-Effekt bzw. Lotusblüten-Effekt.

Die Spezialbeschichtung kann aber auch derart ausgestaltet sein, dass sie regelmäßig mit einem elektrischem Strom beaufschlagt werden kann, wodurch ebenfalls ein störender Bewuchs verhindert werden kann. Hierzu kann beispielsweise eine streifenförmige Lackierung aufgebracht werden, wobei sich zwei unterschiedliche Arten von Streifen mit unterschiedlicher elektrischer Polarität beaufschlagen lassen und wobei ein jeweiliger Streifen der ersten Art immer an zumindest einen Streifen der zweiten Art angrenzt. Durch die Beaufschlagung mit Spannung bzw. Strömen unterschiedlicher Polarität lässt sich somit der pH im Wasser an der ersten Art und der zweiten Art der Streifen variieren, worauf sich die Organismen nicht einstellen können, so dass ein Bewuchs durch Organismen verhindert wird. Durch das derart erzeugte elektrische Feld wird bei der einen Beaufschlagung beispielsweise bei dem ersten Streifen ein alkalisches Umfeld und bei dem zweiten Streifen ein saures Umfeld geschaffen, wobei bei umgekehrter Polarität ein entsprechend umgekehrtes Umfeld erzeugt wird.

Bei einer weiteren vorteilhaften Ausgestaltung der Erfindung ist dabei eine Strömungsgeschwindigkeit des durch den zumindest einen Kühlkanal strömenden Wassers erhöhbar.

Die Erhöhung der Strömungsgeschwindigkeit kann beispielsweise durch eine trichterförmige Einlassöffnung und/oder Auslassöffnung erreicht werden. Die Einlassöffnung und/oder die Auslassöffnung kann insbesondere in der Form einer Windhutze ausgeformt sein, wie sie für Dorade-Lüfter eingesetzt wird, gegebenenfalls unter Berücksichtigung strömungstechnischer Anpassungen für den Einsatz im Wasser. Alternativ kann die Einlassöffnung und/oder die Auslassöffnung wie ein Schnorchel ausgeformt sein. Vorteilhafterweise ist die Einlassöffnung als Düse und die Auslassöffnung als Diffusor ausgeführt.

Insbesondere kann zumindest ein Leitelement vorgesehen sein, welches Verwirbelungen aufgrund von turbulenter Strömung verringert bzw. verhindert und dabei eine laminare Strömung durch den jeweiligen Kühlkanal stabilisiert. Das zumindest eine Leitelement kann beispielsweise plan oder mantelförmig ausgebildet sein, wobei die Mantelform bezüglich eines Zylinders oder eines sich in axialer Richtung verjüngenden Rotationskörpers vorliegen kann und beispielsweise in Strömungsrichtung ausgerichtet ist.

Beispielsweise kann die Einlassöffnung und/oder Auslassöffnung als eine Art Schnorchel ausgebildet sein, in welchen das strömende Meerwasser direkt umgeleitet wird.

Die Erhöhung der Strömungsgeschwindigkeit kann auch durch die zuvor erläuterte Spezialbeschichtung erreicht werden und/oder dadurch, dass die Oberfläche des jeweiligen Kühlkanals zumindest teilweise ähnlich einer Haihaut ausgestaltet ist, wie es von speziellen Schwimmanzügen bekannt ist.

Bei einer weiteren vorteilhaften Ausgestaltung der Erfindung ist dabei zumindest eine weitere Strömungsmaschine vorgesehen, durch welche eine Strömungsgeschwindigkeit des durch den zumindest einen Kühlkanal strömenden Wassers erhöhbar ist.

Dank der zumindest einen weiteren Strömungsmaschine kann die Kühlleistung weiter erhöht werden bzw. der elektrische Gondelantrieb kompakter ausgeführt werden. Die zumindest eine weitere Strömungsmaschine kann beispielsweise als mittels eines Elektromotors antreibbarer Propeller ausgeführt sein, der insbesondere im jeweiligen Kühlkanal angeordnet ist.

Bei einer weiteren vorteilhaften Ausgestaltung der Erfindung ist zumindest einer der Kühlkanäle als Wärmerohr ausgestaltet.

Das Wärmerohr, im englischen auch bekannt als "heat pipe", hat dabei den Vorteil, dass es einen sehr kompakten und zusätzlich einen in sich geschlossenen Aufbau des elektrischen Gondelantriebs ermöglicht. Dabei kann eine beträchtliche Menge von Abwärme durch ein solches Wärmerohr in kühlere Bereiche des elektrischen Gondelantriebs, insbesondere in die Nähe der äußeren Oberfläche, abtransportiert werden.

Dabei ist durchaus eine Kombination der unterschiedlichen Kühlkanäle denkbar. So kann der elektrische Gondelantrieb beispielsweise zumindest einen als Wärmerohr ausgeführten Kühlkanal und zumindest einen Kühlkanal aufweisen, der die weiter oben erläuterte Einlassöffnung und/oder Auslassöffnung aufweist, durch die den Gondelantrieb zumindest teilweise umgibt das Wasser hindurch strömen kann. Insbesondere kann der zumindest eine als Wärmerohr ausgeführte Kühlkanal als eine Art Zubringer für den zumindest einen, für das Wasser zugängliche Kühlkanal dienen. Hierzu kann der jeweilige für das Wasser zugängliche Kanal radial weiter außen und/oder im Bereich der axialen Mitte des elektrischen Gondelantriebs angeordnet sein, wobei der jeweilige als Wärmerohr ausgeführte Kanal die übrige Mantelfläche des elektrischen Gondelantriebs bzw. Stators zumindest teilweise abdeckt, um von dort die Abwärme abzutransportieren und zum jeweiligen für das Wasser zugänglichen Kanal zu transportieren.

Bei einer weiteren vorteilhaften Ausgestaltung der Erfindung ist das Kühlmedium, das im zumindest einen als Wärmerohr ausgestalten Kühlkanal fließen kann, Öl.

Insbesondere für jene Kühlkanäle, die in einem im Gondelantrieb geschlossenen Kühlkreislauf angeordnet sind, kann als Kühlmedium Öl verwendet werden. Dies hat den Vorteil, dass für diese Kühlkanäle keine erhöhten Anforderungen in Bezug auf Korrosionsbeständigkeit erfüllt werden müssen. Insbesondere kann das Öl innerhalb eines als Wärmerohr ausgeführten Kühlkanals eingesetzt werden.

Gemäß oben erläuterten, vorteilhaften Ausgestaltungen der Erfindung ist die Verwendung von Hohlprofilen bzw. Kühlkanälen mit ausreichenden Wärmeleitung und insbesondere vorteilhaften Korrosionseigenschaften vorgesehen, wodurch der sehr kostenintensive Einsatz eines Maschinengehäuses aus einer Kupfer-Aluminium-Legierung vermieden werden kann.

Generell beschränkt sich der zu betreibende Aufwand lediglich auf die Kühlkanäle, die wesentlich kleiner und weniger komplex als das Maschinengehäuse gestaltet sind. Zudem wird die Kühlung örtlich bzw. geometrisch näher an das Statorblechpaket heran geführt, wodurch weniger Materialdicke - gleichbedeutend mit einem verringerten Wärmewiderstand - überwunden werden muss.

Im Folgenden wird die Erfindung anhand der in den Figuren dargestellten Ausführungsbeispiele näher beschrieben und erläutert. Es zeigen:
- FIG 1: ein erstes Ausführungsbeispiel des erfindungsgemäßen elektrischen Gondelantriebs,
- FIG 2: einen Ausschnitt eines Längsschnitts durch ein zweites Ausführungsbeispiel des erfindungsgemäßen elektrischen Gondelantriebs,
- FIG 3: einen Querschnitt durch einige Ausführungsbeispiele von Kühlkanälen,
- FIG 4: weitere Ausführungsbeispiele von Kühlkanälen, und
- FIG 5: zusätzliche Ausführungsbeispiele von Kühlkanälen.

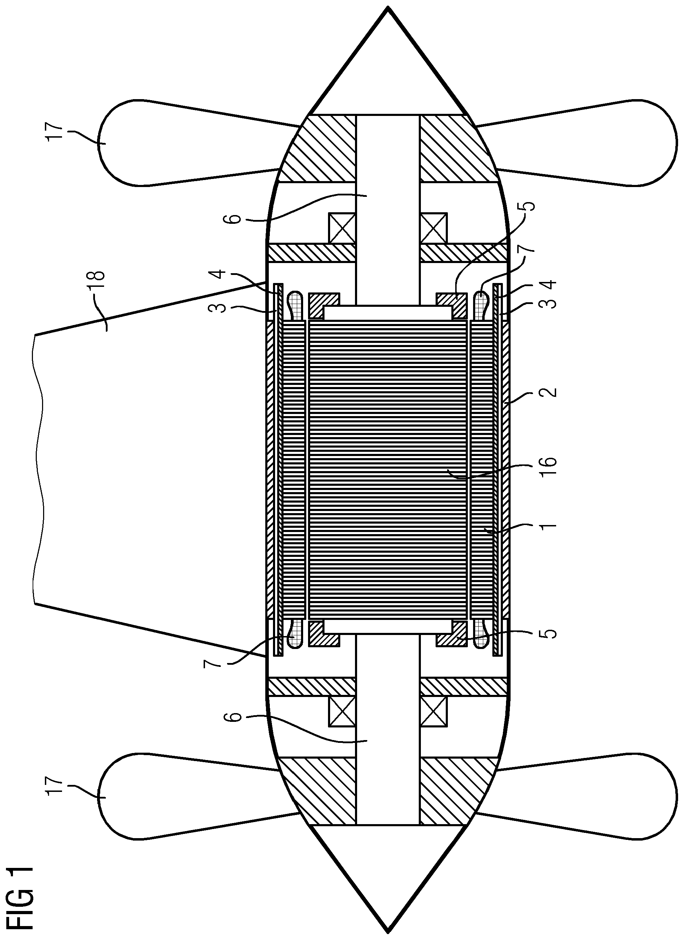

Figur 1 zeigt ein erstes Ausführungsbeispiel des erfindungsgemäßen elektrischen Gondelantriebs. Der elektrische Gondelantrieb ist mittels eines Schachtes 18 am Rumpf eines Schiffes zu befestigen und weist zum Antrieb des Schiffes Propeller 17 auf. Die Antriebsleistung wird dabei von einem Elektromotor aufgebracht, der einen hohlzylinderförmigen Stator 1 und einen im Stator 1 drehbar gelagerten Rotor 16 aufweist, wobei der Rotor 16 mittels einer Welle 6 mit den Propellern 17 drehfest verbunden ist.

Der Stator 1 ist von einem Gehäuseteil 2 in Umfangsrichtung umschlossen, welches sich im Rahmen des Ausführungsbeispiels in axialer Richtung auf der Länge des Stators 1 erstreckt.

Weiterhin sind Kühlkanäle 3 vorgesehen, welche in axialer Richtung verlaufen und in welchen zur Kühlung des Elektromotors ein Kühlmedium fließen kann. Dabei werden die Kühlkanäle 3 nach radial innen jeweils durch eine Schicht 4 eines Materials begrenzt, welches eine Wärmeleitfähigkeit von zumindest 1 W/(m*K) aufweist und welches zumindest in einer meerwasserhaltiger Atmosphäre korrosionsbeständig ist.

Der elektrische Gondelantrieb verfügt weiterhin über eine Strömungsmaschine 5 am jeweiligen axialen Ende des Rotors 16, wobei die Strömungsmaschine 5 als drehfest mit der Welle 6 verbundener Lüfter ausgeführt ist und in radialer Richtung zwischen der Welle 6 und dem Gehäuseteil 2 angeordnet ist. Aus dem Stator 1 ragt in axialer Verlängerung jeweils ein Wickelkopf 7, der jeweils durch mittels der Strömungsmaschine 5 umwälzbare Luft kühlbar ist. Zusätzlich ragen die Kühlkanäle 3 in den axialen Bereich des jeweiligen Wickelkopfs 7, wodurch das in den Kühlkanälen 3 befindliche Kühlmedium thermisch mit der durch die jeweilige Strömungsmaschine 5 umgewälzten Kühlluft gekoppelt ist. Insbesondere kann vorgesehen sein, dass das Kühlmedium die von der jeweiligen Strömungsmaschine 5 umgewälzte Kühlluft ist, so dass die Kühlluft durch die Kühlkanäle 3 und den Bereich des jeweiligen Wickelkopfs 7 umgewälzt wird.

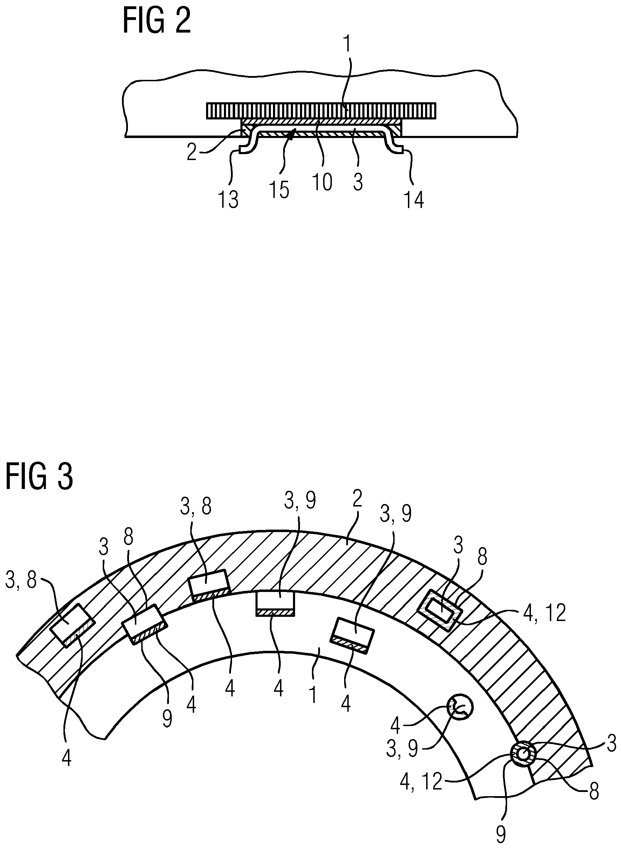

Figur 2 zeigt einen Ausschnitt eines Längsschnitts durch ein zweites Ausführungsbeispiel des erfindungsgemäßen elektrischen Gondelantriebs. Lediglich aus Gründen der Übersichtlichkeit, sind dabei nur einzelne Bauteile des Gondelantriebs dargestellt.

An einen Stator 1 schließt sich nach radial außen zunächst ein Zwischenteil 10 aus einem Material mit einer Wärmeleitfähigkeit von zumindest 1 W/(m*K) und mit einer Korrosionsbeständigkeit zumindest in einer meerwasserhaltiger Atmosphäre und schließlich ein Gehäuseteil 2 an. Dabei umschließt das Gehäuseteil 2 den Stator 1 in Umfangsrichtung und deckt den Stator 1 in axialer Richtung nur teilweise ab.

Im Gehäuseteil 2 verläuft ein axial ausgerichteter Kühlkanal 3, welcher an seinem einen axialen Ende eine Einlassöffnung 13 und an seinem anderen axialen Ende eine Auslassöffnung 14 aufweist, durch welche bei einer entsprechenden Relativbewegung des Gondelantriebs im Wasser das Wasser durch die Einlassöffnung 13, den Kühlkanal 3 und die Auslassöffnung 14 hindurchströmt.

Die Strömungsgeschwindigkeit des Wassers im Kühlkanal 3 kann dadurch erhöht werden, dass die Einlassöffnung 13 wie eine Düse und/oder die Auslassöffnung 14 wie ein Diffusor ausgeformt ist. Eine zusätzliche Erhöhung der Strömungsgeschwindigkeit wird weiterhin durch eine weitere Strömungsmaschine 15 erreicht.

Dabei kann der Kühlkanal 3 eine spezielle Oberfläche aufweisen, welche die Ablagerung von unerwünschten Organismen verhindert.

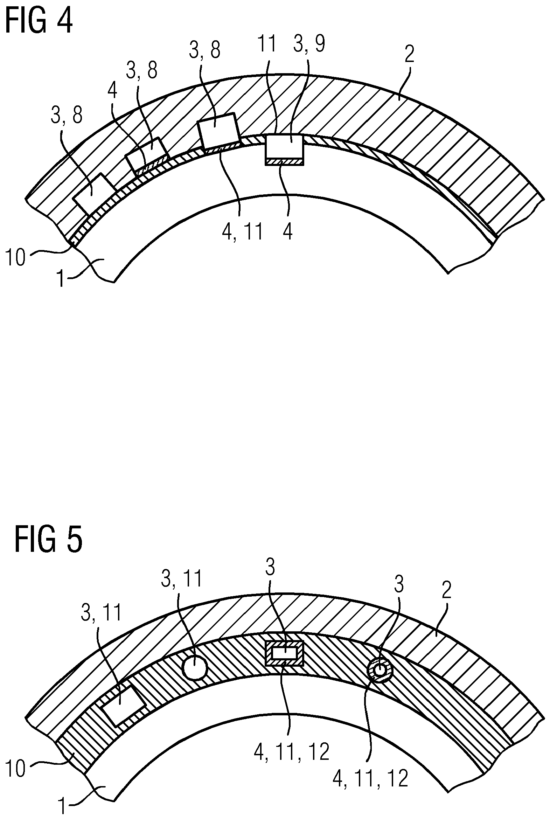

Figur 3 zeigt einen Querschnitt durch einige Ausführungsbeispiele von Kühlkanälen 3. Der Querschnitt ist senkrecht zur Achse eines Beispiels eines elektrischen Gondelantriebs und zeigt radial innen zunächst einen Stator 1, an welchen sich nach radial außen ein Gehäuseteil 2 anschließt. Wie auch bei den im Folgenden diskutierten Figuren 4 und 5 sind in der Figur 3 verschiedene Kühlkanäle 3 dargestellt, wobei der erfindungsgemäße elektrische Gondelantrieb insbesondere zwei oder mehr gleichartige oder unterschiedliche solcher Kühlkanäle 3 aufweisen kann.

Beginnend ganz links, ist ein erster Kühlkanal 3 dargestellt, der innerhalb einer Nut 8 im Gehäuseteil 2 verläuft. Wie die weiteren in Figur 3 dargestellten Kühlkanäle 3 wird auch der erste Kühlkanal 3 nach radial innen durch eine Schicht 4 eines Materials begrenzt, welches eine Wärmeleitfähigkeit von zumindest 1 W/(m*K) aufweist und welches zumindest in einer meerwasserhaltiger Atmosphäre korrosionsbeständig ist. Dabei ist die Nut 8 im Gehäuseteil 2 geschlossen ausgeführt.

Als zweiter von links ist ein zweiter Kühlkanal 3 dargestellt, der innerhalb einer Nut 8 im Gehäuseteil 2 und einer Nut 9 im Stator 1 verläuft, wobei die jeweiligen Nuten 8 und 9 offen ausgeführt sind. Anschließend ist ein dritter Kühlkanal 3 dargestellt, der innerhalb einer offen ausgeführten Nut 8 im Gehäuseteil 2 verläuft. Nachfolgend ist ein vierter Kühlkanal 3 zu sehen, der innerhalb einer offen ausgeführten Nut 9 im Stator 1 angeordnet ist. Weiter nach rechts schließt sich ein fünfter Kühlkanal 3 an, der durch eine geschlossen ausgeführten Nut 9 im Stator 1 gebildet wird.

Als sechster Kühlkanal 3 von links bzw. dritter Kühlkanal 3 von rechts ist ein sechster Kühlkanal 3 dargestellt, der wiederum in einer geschlossen ausgeführten Nut 8 im Gehäuseteil 2 untergebracht ist, wobei der sechste Kühlkanal 3 durch ein passend ausgeformtes Hohlprofil 12 aus dem genannten Material gegenüber dem Gehäuseteil 2 begrenzt wird.

Während die bisher diskutierten Kühlkanäle 3 einen rechteckigen Querschnitt aufweisen, weist ein siebter Kühlkanal 3, welcher rechts des sechsten Kühlkanals 3 angeordnet ist, einen runden Querschnitt auf. Dabei wird der siebte Kühlkanal 3 durch eine geschlossen ausgeführte Nut 9 im Stator 1 gebildet, wobei der siebte Kühlkanal durch die Schicht 4 des genannten Materials nach radial innen begrenzt wird. Ganz rechts ist schließlich ein achter Kühlkanal 3 dargestellt, welcher sich innerhalb einer offenen Nut 8 im Gehäuseteil 3 und einer offenen Nut 9 im Stator 1 befindet. Dabei wird der achte Kühlkanal 3 gegenüber dem Stator 1 und dem Gehäuseteil 2 durch ein passendes ausgeformtes Hohlprofil 12 aus einem Material mit den genannten Eigenschaften begrenzt.

Figur 4 zeigt weitere Ausführungsbeispiele von Kühlkanälen 3. Der Querschnitt ist senkrecht zur Achse eines weiteren Beispiels eines erfindungsgemäßen elektrischen Gondelantriebs und zeigt radial innen zunächst einen Stator 1, an welchen sich nach radial außen zunächst ein Zwischenteil 10 und schließlich ein Gehäuseteil 2 anschließen.

Von links nach rechts sind dabei vier Kühlkanäle 3 dargestellt, wobei ein erster Kühlkanal 3 ganz links in einer offenen Nut 8 im Gehäuseteil 2 untergebracht ist. Der erste Kühlkanal 3 wird dabei nach radial innen durch das Zwischenteil 10 begrenzt, welches im Rahmen des Ausführungsbeispiels des ersten Kühlkanals 3 aus dem genannten Material ist. Für die weiteren drei im Folgenden diskutierten Kühlkanäle braucht das Zwischenteil 10 nicht notwendigerweise eine derartige Wärmeleitfähigkeit bzw. Korrosionsbeständigkeit aufzuweisen.

Anschließend ist ein zweiter Kühlkanal 3 dargestellt, welcher wiederum in einer offenen Nut 8 im Gehäuseteil 2 untergebracht ist und dabei nach radial innen durch eine Schicht 4 des genannten Materials begrenzt wird. Dabei grenzt die Schicht 4 nach radial innen an das Zwischenteil 10, wobei die beiden Bauteile aus demselben oder unterschiedlichen Materialien gefertigt sein können. Als zweiter Kühlkanal 3 von rechts ist ein dritter Kühlkanal 3 dargestellt, welcher in einer offenen Nut 8 im Gehäuseteil 2 und einer Nut 11 im Zwischenteil 10 untergebracht ist und nach radial innen durch eine Schicht 4 des genannten Materials begrenzt wird. Ganz rechts schließlich ist ein vierter Kühlkanal 3 dargestellt, welcher in einer Nut 11 im Zwischenteil 10 und in einer offenen Nut 9 im Stator 3 untergebracht ist und dabei nach radial innen durch eine Schicht 4 des genannten begrenzt wird.

Figur 5 zeigt zusätzliche Ausführungsbeispiele von Kühlkanälen 3. Der Querschnitt ist senkrecht zur Achse eines zusätzlichen Beispiels eines erfindungsgemäßen elektrischen Gondelantriebs und zeigt radial innen zunächst einen Stator 1, an welchen sich nach radial außen zunächst ein Zwischenteil 10 und schließlich ein Gehäuseteil 2 anschließen.

Dargestellt sind vier Kühlkanäle 3, welche jeweils in einer geschlossen ausgeführten Nut 11 im Zwischenteil 3 angeordnet sind. Dabei weist der erste Kühlkanal 3 von links einen rechteckigen und der zweite Kühlkanal 3 von links einen runden Querschnitt auf. Im Rahmen des Ausführungsbeispiels des ersten und zweiten Kühlkanals 3 von links weist das Zwischenteil eine Wärmeleitfähigkeit von zumindest 1 W/(m*K) und eine Korrosionsbeständigkeit zumindest in einer meerwasserhaltiger Atmosphäre auf. Für die beiden weiteren im Folgenden diskutierten Kühlkanäle 3 braucht das Zwischenteil 10 nicht notwendigerweise eine derartige Wärmeleitfähigkeit bzw. Korrosionsbeständigkeit aufzuweisen.

Der erste Kühlkanal 3 von rechts weist einen runden und der zweite Kühlkanal 3 von rechts einen rechteckigen Querschnitt auf, wobei die beiden Kühlkanäle 3 jeweils durch ein Hohlprofil 12 aus dem genannten Material gegenüber dem Zwischenteil 10 begrenzt werden.

Für alle erläuterten Ausführungsbeispiele kann das Material der Schicht auch eine Wärmeleitfähigkeit von zumindest 60 W/(m*K) oder von zumindest 80 W/(m*K) aufweisen.

Zusammenfassend betrifft die Erfindung einen elektrischen Gondelantrieb für ein Schiff, wobei der Gondelantrieb einen Elektromotor, welcher einen Stator aufweist, und ein Gehäuseteil aufweist, welches sich in axialer Richtung zumindest teilweise entlang des Stators erstreckt und welches in Umfangsrichtung den Stator zumindest teilweise umfasst. Um einen elektrischen Gondelantrieb mit einer verbesserten Kühlung bereitzustellen, wird vorgeschlagen, dass im Wesentlichen in axialer Richtung verlaufende Kühlkanäle vorgesehen sind, in welchen jeweils zumindest ein Kühlmedium fließen kann und mittels welchen der Elektromotor kühlbar ist, wobei die Kühlkanäle zumindest nach radial innen jeweils durch eine Schicht eines Materials begrenzt werden, welches eine Wärmeleitfähigkeit von zumindest 1 W/(m*K) aufweist und welches zumindest in meerwasserhaltiger Atmosphäre korrosionsbeständig ist.

## Patentansprüche

1. Elektrischer Gondelantrieb für ein Schiff aufweisend
- einen Elektromotor, welcher einen Stator (1) aufweist,
- ein Gehäuseteil (2), welches sich in axialer Richtung zumindest teilweise entlang des Stators (1) erstreckt und welches in Umfangsrichtung den Stator (1) zumindest teilweise umfasst,
- im Wesentlichen in axialer Richtung verlaufende Kühlkanäle (3), in welchen jeweils zumindest ein Kühlmedium fließen kann und mittels welchen der Elektromotor kühlbar ist,
**dadurch gekennzeichnet, dass** die Kühlkanäle (3) zumindest nach radial innen jeweils durch eine Schicht (4) eines Materials begrenzt werden, welches eine Wärmeleitfähigkeit von zumindest 60 W/(m*K) aufweist und welches zumindest in einer meerwasserhaltiger Atmosphäre korrosionsbeständig ist,
wobei zur Ausbildung zumindest eines der Kühlkanäle (3) eine Nut (8) im Gehäuseteil (2) vorgesehen ist,
wobei das Material, aus dem die Schicht (4) ist, eine höhere Korrosionsbeständigkeit als das Material des Gehäuseteils (2) und/oder das Material des Stators (1) aufweist.

2. Elektrischer Gondelantrieb nach Anspruch 1,
wobei der Stator (1) am jeweiligen axialen Ende einen Wickelkopf (7) aufweist,
wobei zumindest einer der Kühlkanäle (3) zumindest abschnittsweise im axialen Bereich einer der Wickelköpfe (7) verläuft,
wobei zumindest eine Strömungsmaschine (5) vorgesehen ist, welche zwischen einer Welle (6) des elektrischen Gondelantriebs und dem Gehäuseteil (2) angeordnet ist und welche drehfest mit der Welle (6) verbunden ist,
wobei der jeweilige Wickelkopf (7) durch ein mittels der zumindest einen Strömungsmaschine (5) umwälzbares, weiteres Kühlmedium kühlbar ist.

3. Elektrischer Gondelantrieb nach einem der vorhergehenden Ansprüche,
wobei zur Ausbildung zumindest eines der Kühlkanäle (3) eine Nut (9) im Stator (1) vorgesehen ist.

4. Elektrischer Gondelantrieb nach einem der vorhergehenden Ansprüche,
wobei zwischen dem Gehäuseteil (2) und dem Stator (1) ein Zwischenteil (10) aus dem Material, aus dem die Schicht (4) ist, ist.

5. Elektrischer Gondelantrieb nach Anspruch 4,
wobei zur Ausbildung zumindest eines der Kühlkanäle (3) eine Nut (11) im Zwischenteil (10) vorgesehen ist.

6. Elektrischer Gondelantrieb nach einem der vorhergehenden Ansprüche,
wobei die Nut (8, 9, 11) offen oder geschlossen ausgeführt ist.

7. Elektrischer Gondelantrieb nach einem der vorhergehenden Ansprüche,
wobei an der radialen Begrenzung zumindest eines der Kühlkanäle (3) ein Hohlprofil (12) aus dem Material, aus dem die Schicht (4) ist, angeordnet ist.

8. Elektrischer Gondelantrieb nach einem der vorhergehenden Ansprüche,
wobei das Material, aus dem die Schicht (4) ist, eine Kupfer-Aluminium-Legierung aufweist.

9. Elektrischer Gondelantrieb nach einem der vorhergehenden Ansprüche,
wobei am jeweiligen axialen Ende zumindest eines der Kühlkanäle (3) jeweils eine Einlassöffnung (13) und jeweils eine Auslassöffnung (14) vorgesehen sind,
wobei die jeweilige Einlassöffnung (13) und/oder die jeweilige Auslassöffnung (14) derart ausgeformt ist, dass bei einer Relativbewegung des Gondelantriebs in Bezug auf den Gondelantrieb zumindest teilweise umgebendes Wasser das Wasser durch die Einlassöffnung (13), den zumindest einen Kühlkanal (3) und die Auslassöffnung (14) hindurch strömen kann.

10. Elektrischer Gondelantrieb nach Anspruch 9,
wobei eine Strömungsgeschwindigkeit des durch den zumindest einen Kühlkanal (3) strömenden Wassers erhöhbar ist.

11. Elektrischer Gondelantrieb nach Anspruch 9 oder 10,
wobei zumindest eine weitere Strömungsmaschine (15) vorgesehen ist, durch welche eine Strömungsgeschwindigkeit des durch den zumindest einen Kühlkanal (3) strömenden Wassers erhöhbar ist.

12. Elektrischer Gondelantrieb nach einem der vorhergehenden Ansprüche,
wobei zumindest einer der Kühlkanäle (3) als Wärmerohr ausgestaltet ist.

## Claims

1. Electric pod drive for a ship, having
- an electric motor, which has a stator (1),
- a housing part (2), which extends at least partly along the stator (1) in the axial direction and which comprises the stator (1) at least partly in the circumferential direction,
- cooling channels (3) running essentially in the axial direction, in which at least one cooling medium can flow in each case and by means of which the electric motor can be cooled,
**characterised in that** the cooling channels (3) are delimited in each case at least radially inwards by a layer (4) of a material which has a thermal conductivity of at least 60 W(m*K) and which is corrosion-resistant at least in an atmosphere containing seawater,
wherein there is provision for a groove (8) in the housing part (2) to form at least one of the cooling channels (3),
wherein the material which forms the layer (4) has a higher corrosion resistance than the material of the housing part (2) and/or the material of the stator (1).

2. Electric pod drive according to claim 1,
wherein the stator (1) has a winding head (7) on each axial end,
wherein at least one of the cooling channels (3) runs at least in sections in the axial region of one of the winding heads (7),
wherein there is provision for at least one turbo-machine (5), which is arranged between a shaft (6) of the electric pod drive and the housing part (2) and which is connected to the shaft (6) in a rotationally-fixed manner,
wherein each winding head (7) can be cooled by a further cooling medium which can be circulated by means of the at least one turbo-machine (5).

3. Electric pod drive according to one of the preceding claims,
wherein there is provision for a groove (9) in the stator (1) to form at least one of the cooling channels (3).

4. Electric pod drive according to one of the preceding claims,
wherein an intermediate part (10) made from the material which forms the layer (4) is between the housing part (2) and the stator (1).

5. Electric pod drive according to claim 4,
wherein there is provision for a groove (11) in the intermediate part (10) to form at least one of the cooling channels (3).

6. Electric pod drive according to one of the preceding claims,
wherein the groove (8, 9, 11) is configured to be open or closed.

7. Electric pod drive according to one of the preceding claims,
wherein a hollow profile (12) made from the material which forms the layer (4) is arranged on the radial boundary of at least one of the cooling channels (3).

8. Electric pod drive according to one of the preceding claims,
wherein the material which forms the layer (4) has a copper-aluminium alloy.

9. Electric pod drive according to one of the preceding claims,
wherein on each axial end of at least one of the cooling channels (3) there is provision for an inlet opening (13) in each case and for an outlet opening (14) in each case,
wherein each inlet opening (13) and/or each outlet opening (14) is shaped such that with a relative movement of the pod drive in relation to water at least partly surrounding the pod drive, the water can flow through the inlet opening (13), the at least one cooling channel (3) and the outlet opening (14).

10. Electric pod drive according to claim 9,
wherein a flow speed of the water flowing through the at least one cooling channel (3) can be increased.

11. Electric pod drive according to claim 9 or 10,
wherein there is provision for at least one further turbo-machine (15), through which a flow speed of the water flowing through the at least one cooling channel (3) can be increased.

12. Electric pod drive according to one of the preceding claims,
wherein at least one of the cooling channels (3) is embodied as a thermal pipe.

## Revendications

1. Système de propulsion électrique monté dans une nacelle pour un navire comportant
- un moteur électrique qui a un stator ( 1 ),
- une partie ( 2 ) formant enveloppe, qui s'étend dans la direction axiale, au moins en partie le long du stator ( 1 ) et qui, dans la direction périphérique, entoure le stator ( 1 ) au moins en partie,
- des conduits ( 3 ) de refroidissement, qui s'étendent sensiblement dans la direction axiale, dans lesquels peut passer respectivement au moins un fluide de refroidissement et au moyen desquels le moteur électrique peut être refroidi,
**caractérisé en ce que** les conduits ( 3 ) de refroidissement sont délimités au moins vers l'intérieur radialement, respectivement par une couche ( 4 ) d'une matière qui a une conductibilité thermique d'au moins 60W/ (m*K) et qui résiste à la corrosion au moins dans une atmosphère contenant de l'eau de mer,
dans lequel il est prévu, dans la partie ( 2 ) formant enveloppe, au moins une rainure ( 8 ) pour constituer au moins l'un des conduits ( 3 ) de refroidissement,
dans lequel la matière, dont est constituée la couche ( 4 ), a une résistance à la corrosion plus grande que la matière de la partie ( 2 ) formant enveloppe et/ou que la matière du stator ( 1 ) .

2. Système de propulsion électrique monté dans une nacelle suivant la revendication 1,
dans lequel le stator ( 1 ) a une tête ( 7 ) de bobine à chaque extrémité axiale,
dans lequel au moins l'un des conduits ( 3 ) de refroidissement s'étend au moins par tronçon dans la région axiale de l'une des têtes ( 7 ) de bobine,
dans lequel il est prévu au moins une turbomachine ( 5 ) qui est disposée entre un arbre ( 6 ) du système de propulsion électrique monté dans une nacelle et la partie ( 2 ) formant enveloppe et qui est solidaire en rotation de l'arbre ( 6 ), dans lequel chaque tête ( 7 ) de bobine peut être refroidie par un autre fluide de refroidissement pouvant être mis en circulation au moyen de la au moins une turbomachine ( 5 ).

3. Système de propulsion électrique monté dans une nacelle suivant l'une des revendications précédentes, dans lequel il est prévu une rainure ( 9 ) dans le stator ( 1 ) pour constituer au moins l'un des conduits ( 3 ) de refroidissement.

4. Système de propulsion électrique monté dans une nacelle suivant l'une des revendications précédentes, dans lequel une partie ( 10 ) intermédiaire en la matière dont est constituée la couche ( 4 ) est comprise entre la partie ( 2 ) formant enveloppe et le stator ( 1 ).

5. Système de propulsion électrique monté dans une nacelle suivant la revendication 4, dans lequel il est prévu une rainure ( 11 ) dans la partie ( 10 ) intermédiaire pour constituer au moins l'un des conduits ( 3 ) de refroidissement.

6. Système de propulsion électrique monté dans une nacelle suivant l'une des revendications précédentes, dans lequel la rainure ( 8, 9, 11 ) est réalisée ouverte ou fermée.

7. Système de propulsion électrique monté dans une nacelle suivant l'une des revendications précédentes, dans lequel un profilé ( 12 ) creux en la matière, dont est constituée la couche ( 4 ), est disposé à la limite radiale d'au moins l'un des conduits ( 3 ) de refroidissement.

8. Système de propulsion électrique monté dans une nacelle suivant l'une des revendications précédentes, dans lequel la matière, dont est constituée la couche ( 4 ), comporte un alliage de cuivre et d'aluminium.

9. Système de propulsion électrique monté dans une nacelle suivant l'une des revendications précédentes, dans lequel il est prévu à chaque extrémité axiale d'au moins l'un des conduits ( 3 ) de refroidissement une ouverture ( 13 ) d'entrée et une ouverture ( 14 ) de sortie,
dans lequel l'ouverture ( 13 ) d'entrée et/ou l'ouverture ( 14 ) de sortie sont conformées de manière à ce que, pour un mouvement relatif du système de propulsion monté dans une nacelle par rapport à de l'eau entourant au moins en partie le système de propulsion monté dans une nacelle, l'eau peut passer par l'ouverture ( 13 ) d'entrée par le au moins un conduit ( 3 ) de refroidissement et par l'ouverture ( 14 ) de sortie.

10. Système de propulsion électrique monté dans une nacelle suivant la revendication 9, dans lequel une vitesse d'écoulement de l'eau passant dans le au moins un conduit ( 3 ) de refroidissement peut être augmentée.

11. Système de propulsion électrique monté dans une nacelle suivant la revendication 9 ou 10, dans lequel il est prévu au moins une autre turbomachine ( 15 ) par laquelle une vitesse d'écoulement de l'eau passant dans le au moins un conduit ( 3 ) de refroidissement peut être augmentée.

12. Système de propulsion électrique monté dans une nacelle suivant l'une des revendications précédentes, dans lequel au moins l'un des conduits ( 3 ) de refroidissement est conformé en caloduc.
